# EUROPÄISCHE PATENTSCHRIFT

(11) **EP 1 511 665 B1**
(45) Veröffentlichungstag und Bekanntmachung des Hinweises auf die Patenterteilung: **03.01.2007**
(21) Anmeldenummer: 03712039.1
(22) Anmeldetag: 17.03.2003
(51) Int. Cl.: B62D 5/04, H02J 1/14

(54) **DYNAMISCHER, SICHERHEITSRELEVANTER HOCHSTROMVERBRAUCHER IN EINEM KRAFTFAHRZEUGBORDNETZ**
DYNAMIC, SAFETY-RELEVANT HIGH-CURRENT CONSUMER IN A MOTOR VEHICLE ELECTRICAL SYSTEM
CONSOMMATEUR DE COURANT DE HAUTE INTENSITE, DYNAMIQUE ET SERVANT A LA SECURITE, D'UN RESEAU DE BORD DANS UN VEHICULE

(30) Priorität: 28.05.2002 DE 10224388
(43) Veröffentlichungstag der Anmeldung: 09.03.2005
(73) Patentinhaber: Volkswagen AG, 38436 Wolfsburg (DE)
(72) Erfinder: WEGNER, Berend, 38446 Wolfsburg (DE); SCHWERTMANN, Thilo, 38444 Wolfsburg (DE)
(74) Vertreter: Effert, Bressel und Kollegen
(86) Internationale Anmeldenummer: PCT/EP2003/002762
(87) Internationale Veröffentlichungsnummer: WO 2003/099633

(56) Entgegenhaltungen:
- EP-A- 0 279 168
- EP-A- 1 086 847
- DE-C- 3 936 638
- US-A- 4 837 690
- US-A- 5 293 076
- US-A- 6 148 948
- US-A1- 2001 027 895
- US-B1- 6 407 521
- PATENT ABSTRACTS OF JAPAN vol. 016, no. 002 (M-1197), 7. Januar 1992 (1992-01-07) -& JP 03 227776 A (MAZDA MOTOR CORP), 8. Oktober 1991 (1991-10-08)
- PATENT ABSTRACTS OF JAPAN vol. 018, no. 453 (M-1662), 24. August 1994 (1994-08-24) -& JP 06 144258 A (TOYOTA MOTOR CORP;OTHERS: 01), 24. Mai 1994 (1994-05-24)
- PATENT ABSTRACTS OF JAPAN vol. 2000, no. 10, 17. November 2000 (2000-11-17) -& JP 2000 198457 A (HONDA MOTOR CO LTD), 18. Juli 2000 (2000-07-18)

## Beschreibung

Die Erfindung betrifft einen dynamischen, sicherheitsrelevanten Hochstromverbraucher in einem Kraftfahrzeugbordnetz und ein Verfahren zu dessen Ansteuerung.

Es ist allgemein bekannt, zur Entlastung der Fahrzeugbatterie in kritischen Bordnetzsituationen eine Entlastung des Bordnetzes vorzunehmen, indem eine Reduzierung der elektrischen Verbraucherlast vorgenommen wird.

Aus der DE 44 22 329 A1 ist ein Verfahren zum Betreiben eines elektrischen Fahrzeugbordnetzes bekannt, das den Ladezustand der Fahrzeugbatterie und den jeweiligen Wirkungsgrad des Generators berücksichtigt. Wird ein kritischer Bordnetzzustand festgestellt, werden einzelne Verbraucher abgeschaltet oder mit einer geringeren Energiezufuhr betrieben. So kann beispielsweise die elektrische Heizung eines Fahrzeugsitzes vorübergehend abgeschaltet oder nur noch im Impulsbetrieb betrieben werden. Dabei ist vorgesehen, dass den elektrischen Verbrauchern Prioritätsstufen zugeordnet sind, die eine Rangfolge der Abschaltung im Falle eines kritischen Bordnetzzustandes angeben.

Aus der DE 198 44 512 C1 ist ein Verfahren zur Reduzierung der Bordnetzbelastung eines Kraftfahrzeuges bekannt, wobei im Falle eines kritischen Bordnetzzustands einzelne elektrische Verbraucher unter Berücksichtigung von den Verbrauchern zugeordneten Abschaltprioritäten abgeschaltet oder mit reduzierter Energie versorgt werden, wobei eine Beurteilung der jeweils aktuellen Betriebssituation erfolgt und den elektrischen Verbrauchern von der Betriebssituation abhängige Abschaltprioritäten zugeordnet werden.

Alle bekannten Verfahren betreffen dabei die Reduzierung der Bordnetzbelastung durch Abschaltung von Komfortverbrauchern, wohingegen die sicherheitsrelevanten Verbraucher jeweils ausdrücklich aus diesen Strategien herausgenommen werden. Zwar profitieren auch die sicherheitsrelevanten Verbraucher von dieser Bordnetzstabilisierung, jedoch bieten diese Verfahren keine Lösung, wenn der sicherheitsrelevante Verbraucher ein dynamischer Hochstromverbraucher ist, dessen Anforderung gerade zum Einbruch des Bordnetzes führen würde. Beispiele für derartige dynamische, sicherheitsrelevante Hochstromverbraucher sind elektromechanische Bremsanlagen oder Lenksysteme, deren elektromotorische Aktuatoren Stromspitzen von bis zu ca. 8.000 A/s abrufen, um die gewünschten Stellsignale schnell umzusetzen. Zum Abpuffern dieser Stromspitzen ist es bereits vorgeschlagen worden, diesen lokale separate Energiespeicher zuzuordnen, die die kurzzeitig angeforderten Stromspitzen übernehmen. Nachteilig daran ist, dass diese zusätzlichen lokalen Energiespeicher zusätzlichen Bauraum beanspruchen und darüber hinaus mit einer eigenen Funktionalitätsüberwachung versehen werden müssen.

Aus der gattungsgemäßen US 20010027895 A1 ist ein Kraftfahrzeugbordnetz mit einem sicherheitsrelevanten Hochstromverbraucher bekannt, der als elektromechanisches Lenksystem ausgebildet ist. Der sicherheitsrelevante Hochstromverbraucher umfasst hierzu Sensoren zur Erfassung von Eingangsgrößen, ein Steuergerät zur Generierung eines Stellsignals und einen Aktuator zur Umsetzung des Stellsignals in eine Ausgangsgröße. Weiter ist dem sicherheitsrelevanten Hochstromverbraucher eine Einrichtung zur Erfassung der Spannungslage zugeordnet, deren Daten dem Steuergerät lokal zur Verfügung stehen. Unterschreitet die Spannung einen Grenzwert, so wird der Aktuator abgeschaltet. Weiter ist vorgesehen, dass bei einem weiteren Grenzwert, der größer als der erste Grenzwert ist, zunächst Komfortverbraucher abgeschaltet werden. Dieses vollständige Abschalten ist vom Verhalten mit einem Totalausfall durch einen Spannungseinbruch vergleichbar.

Der Erfindung liegt daher das technische Problem zugrunde, ein Kraftfahrzeugbordnetz mit einem dynamischen, sicherheitsrelevanten Hochstromverbraucher zu schaffen, bei dem bei geringem baulichen Aufwand ein Totalausfall vermieden wird.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu umfasst der Hochstromverbraucher eine Einrichtung zur Erfassung der Spannungslage eines Bordnetzes, deren Daten dem Steuergerät lokal zur Verfügung stehen, wobei das Steuergerät bei der Generierung des Stellsignals die Parameter des Aktuators derart anpasst, dass ein Spannungseinbruch der Bordnetzspannung vermieden wird. Hierdurch kann auf separate Energiespeicher verzichtet werden, wobei der schaltungstechnische Mehraufwand sich auf die Einrichtung zur Erfassung der Spannungslage des Bordnetzes reduziert sowie eine softwaretechnische Anpassung der Steuergerätesoftware. Dabei erfolgt die Anpassung der Parameter lokal und autark im Hochstromverbraucher und nicht in einem gegebenenfalls vorhandenen Bordnetzmanagement-Steuergerät. Der Grund hierfür liegt darin, dass die Kommunikation über ein Bussystem von dem Bordnetzmanagement-Steuergerät zu dem Hochstromverbraucher zu langsam wäre. Durch die direkte Auswertung der Bordnetzspannung kann der Hochstromverbraucher sehr schnell die Auswirkungen seiner Anforderung erfassen und durch Anpassung der Parameter dem Spannungseinbruch und somit dem Totalausfall entgegenwirken. Dabei kommt es zwar gegebenenfalls zu einer Funktionsbeeinträchtigung des Hochstromverbrauchers, jedoch nicht zu einem sicherheitsgefährdenden Totalausfall.

Des Weiteren reagiert der Hochstromverbraucher auch auf Einfachfehler, wie beispielsweise eine defekte Batterie. Ein derartiger Fehler kann von den bekannten Systemen nur schwer erkannt werden, da zunächst der Generator die Bordnetzspannung auf Norm-Betriebsniveau hält. Kommt es dann zu einer dynamischen Anforderung, beispielsweise einer dynamischen Lenkbewegung bei einem elektromechanischen Lenksystem, bricht die Generatorspannung mangels Dynamik ein, da die ansonsten puffernde Batterie fehlt. Insbesondere bei leistungsgeregelten Ansteuerungen, wie beispielsweise bei elektromechanischen Lenksystemen, wird dem Bordnetz bei fallender Spannung höherer Strom entnommen, was den Einbruch weiter beschleunigt. Gemäß dem Stand der Technik käme es zu einem schlagartigen Ausfall der Lenkung bei Unterschreitung einer kritischen Mindestspannung, wohingegen erfindungsgemäß durch die abgestufte Abregelung dies verhindert wird.

Hierzu wird der Spannungslage des Bordnetzes mindestens ein Grenzwert zugeordnet, wobei bei Unterschreitung dieses Grenzwertes der Bordnetzspannung die maximale Stromaufnahme und der maximale Stromgradient des Hochstromverbrauchers durch die Anpassung der Parameter derart begrenzt ,dass eine gestufte Abschaltung des Hochstromverbranchers erfolgt, ohne diesen total abzuschalten. In einer bevorzugten Ausführungsform ist die Einrichtung zur Erfassung der Spannungslage im Bordnetz in den Hochstromverbraucher integriert, wobei die Integration vorzugsweise im Steuergerät erfolgt.

In einer weiteren bevorzugten Ausführungsform ist der Spannungslage im Bordnetz mindestens ein weiterer Grenzwert zugeordnet, bei dessen Unterschreitung Komfortverbraucher abgeschaltet werden. Die Abschaltung der Komfortverbraucher kann dabei nach einer festgelegten Prioritätsliste oder nach einer situativ angepassten Abschaltpriorität erfolgen.

Ein bevorzugtes Anwendungsgebiet der Erfindung ist der Einsatz in einem elektromechanischen Lenksystem.

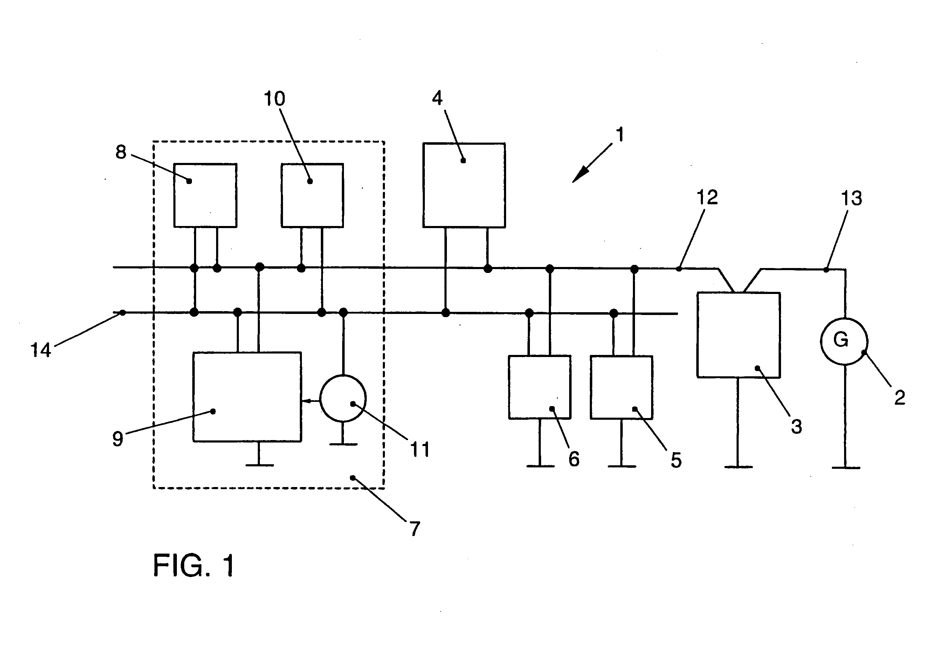

Die Erfindung wird nachfolgend anhand eines bevorzugten Ausführungsbeispiels näher erläutert. Die einzige Figur zeigt ein schematisches Blockschaltbild eines dynamischen, sicherheitsrelevanten Hochstromverbrauchers in einem Kraftfahrzeugbordnetz.

Das Kraftfahrzeugbordnetz 1 umfasst einen Generator 2, eine Batterie 3, ein Batterie-Management-Steuergerät 4, Komfortverbraucher 5, 6 und einen dynamischen, sicherheitsrelevanten Hochstromverbraucher 7. Der dynamische, sicherheitsrelevante Hochstromverbraucher 7 umfasst eine Sensorik 8, ein Steuergerät 9, einen Aktuator 10 und eine Einrichtung 11 zur Erfassung der Spannungslage im Kraftfahrzeugbordnetz 1. Über die Bordnetzleitung 12 sind das Batterie-Management-Steuergerät 4, die Komfortverbraucher 5, 6 und der Hochstromverbraucher 7 mit der Batterie 3 und über diese mit dem Generator 2 verbunden. Zwischen Batterie 3 und Generator 2 liegt eine Ladeleitung 13, über die der Generator 2 die Batterie 3 lädt. Das Batterie-Management-Steuergerät 4, die Komfortverbraucher 5, 6 und der Hochstromverbraucher 7 sind darüber hinaus über einen Datenbus 14 miteinander verbunden.

Das Batterie-Management-Steuergerät 4 umfasst ebenfalls eine Einrichtung zur Erfassung der Spannungslage im Kraftfahrzeugbordnetz 1 oder greift aber auf die Daten der Einrichtung 11 zurück. Bei Unterschreitung eines Grenzwertes für die Bordnetzspannung schaltet das Batterie-Management-Steuergerät 4 die Komfortverbraucher 5, 6 sukzessive oder gleichzeitig ab und schaltet diese nach bestimmten Kriterien wieder zu, wenn sich der Bordnetzzustand wieder erholt hat. Das Batterie-Management-Steuergerät 4 führt also ein zentrales Energiemanagement durch.

Bevor das Energiemanagement des Hochstromverbrauchers erläutert wird, soll zunächst kurz die Funktionsweise kurz erläutert werden. Über die Sensorik 8 erfasst der Hochstromverbraucher 7 eine Eingangsgröße, die beispielsweise elektromechanisch umgesetzt werden soll. Handelt es sich bei dem Hochstromverbraucher 7 um ein elektromechanisches Lenksystem, so wird über die Sensorik 8 ein eingeschlagener Lenkwinkel erfasst und an das Steuergerät 9 übermittelt. Das Steuergerät 9 generiert aus dem übermittelten Lenkwinkel ein Stellsignal für den elektromotorischen Aktuator 10, der dann an den Spurstangen die gewünschte Lenkbewegung durchführt. An den elektromotorischen Antrieb des Aktuators 10 sind dabei hohe Dynamikanforderungen zu stellen, um ausreichend schnell die geforderten Lenkbewegungen umzusetzen. Hierzu werden extrem steile Stromgradienten und hohe Stromaufnahmen benötigt, um diese Anforderungen umzusetzen. Prinzipiell sind jedoch auch andere Hochstromverbraucher 7 denkbar, die anders aufgebaut sind bzw. keinen elektromotorischen Aktuator besitzen.

Aufgrund des Umstandes, dass der Hochstromverbraucher 7 sicherheitsrelevant ist, darf dieser nicht abgeschaltet werden. Des weiteren ist ein Zusammenbruch der Bordnetzspannung zu verhindern, bei der es zu einem funktionalen Totalausfall des Hochstromverbrauchers 7 kommt.

Hierzu erfasst die Einrichtung 11 kontinuierlich die Bordnetzspannung und liefert diese Daten an das Steuergerät 9. Unterschreitet dann die Bordnetzspannung einen Grenzwert, so erfolgt eine gestufte Abschaltung des Hochstromverbrauchers 7, ohne diesen total abzuschalten. Bei einem elektromechanischen Lenksystem wird dabei beispielsweise die Lenkunterstützung reduziert, aber es wird weiterhin eine Lenkfunktion ausgeführt. Diese Anpassung an die Bordnetzspannung erfolgt dabei derart, dass durch den Stromgradienten bzw. die Stromaufnahme des Hochstromverbrauchers das Bordnetz nicht unter eine kritische Spannungsgrenze fällt, wo ein Totalausfall erfolgen könnte. Bei dem beschriebenen Beispiel elektromechanisches Lenksystem kann diese Reduzierung jedoch nur indirekt erfolgen, indem auf die System- und Lenkparameter, wie beispielsweise Unterstützungskennlinie, Gradient Motormoment, maximales Motormoment im Steuergerät eingewirkt wird, um den maximalen Stromgradienten bzw. die Stromaufnahme des Aktuators 10 zu reduzieren. Aufgrund der lokalen und autarken Reaktion des Hochstromverbrauchers kann dieser im ms-Bereich auf Änderungen der Bordnetzspannung reagieren. Somit kann auch ausreichend schnell auf zuvor nicht erkannte defizitäre Bordnetzzustände, beispielsweise aufgrund einer defekten Ladeleitung 13 oder einer defekten Batterie, ausreichend schnell reagiert werden. Eine abgestufte Abschaltung des Hochstromverbrauchers 7 kann von dem Steuergerät 9 dem Batterie-Management-Steuergerät 4 mitgeteilt werden, das dann ergänzend Maßnahmen zur Bordnetzstabilisierung treffen kann.

## Patentansprüche

1. Kraftfahrzeugbordnetz mit einem dynamischen, sicherheitsrelevanten Hochstromverbraucher, der eine Sensorik zur Erfassung einer Eingangsgröße, ein Steuergerät zur Generierung eines Stellsignals und einen Aktuator zur Umsetzung des Stellsignals in eine Ausgangsgröße umfasst, wobei dem Hochstromverbraucher (7) eine Einrichtung (11) zur Erfassung der Spannungslage des Kraftfahrzeugbordnetzes (1) zugeordnet ist, deren Daten dem Steuergerät (9) lokal zur Verfügung stehen, wobei das Steuergerät (9) mittel umfasst, womit bei der Generierung des Stellsignals die Parameter des Aktuators (10) derart angepasstiberden, dass ein Spannungseinbruch der Bordnetzspannung vermieden wird,
**dadurch gekennzeichnet, dass**
der Spannungslage des Bordnetzes (1) mindestens ein Grenzwert zugeordnet ist,
wobei mittel vorgesehen sind, womit bei Unterschreitung des ersten Grenzwertes der Bordnetzspannung die maximale Stromaufnahme und der maximale Stromgradient des Aktuators (10) durch Anpassung der Parameter derart begrenzt werden, dass ein gestufte Abschaltung des Hochstromverbrauchers erfolgt, ohne diesen total abzuschalten.

2. Kraftfahrzeugbordnetz nach Anspruch 1, **dadurch gekennzeichnet, dass** die Einrichtung (11) zur Erfassung der Spannungslage im Bordnetz (1) in den Hochstromverbraucher (7) integriert ist.

3. Kraftfahrzeugbordnetz nach Anspruch 1 oder 2, **dadurch gekennzeichnet, dass** der Spannungslage im Bordnetz (1) mindestens ein weiterer Grenzwert zugeordnet ist, bei dessen Unterschreitung Komfortverbraucher abgeschaltet werden.

4. Kraftfahrzeugbordnetz nach Anspruch 3, **dadurch gekennzeichnet, dass** der weitere Grenzwert höher als der erste Grenzwert ist.

5. Kraftfahrzeugbordnetz nach einem der vorangegangenen Ansprüche, **dadurch gekennzeichnet, dass** der dynamische, sicherheitsrelevante Hochstromverbraucher (7) als elektromechanisches Lenksystem ausgebildet ist.

6. Verfahren zur Ansteuerung eines Hochstromverbrauchers in einem Kraftfahrzeugbordnetz nach Anspruch 1, **dadurch gekennzeichnet, dass** mittels der Einrichtung (11) zur Erfassung der Spannungslage des Bordnetzes (1) kontinuierlich die Bordnetzspannung erfasst wird und das Steuergerät (9) bei der Generierung des Stellsignals die Parameter des Aktuators (10) derart anpasst, dass ein Spannungseinbruch der Bordnetzspannung vermieden wird, wobei der Spannungslage des Bordnetzes (1) mindestens ein Grenzwert zugeordnet ist, wobei bei Unterschreitung des ersten Grenzwertes der Bordnetzspannung die maximale Stromaufnahme und der maximale Stromgradient des Aktuators (10) durch Anpassung der Parameter derart begrenzt werden, dass eine gestufte Abschaltung des Hochstromverbrauchers erfolgt, ohne diesen total abzuschalten.

## Claims

1. Motor vehicle on-board power supply system having a dynamic, safety-relevant heavy-current load, which comprises a sensor system for detection of an input variable, a controller for generation of an actuating signal and an actuator for conversion of the actuating signal to an output variable, with the heavy-current load (7) having an associated device (11) for detection of the voltage level of the motor vehicle on-board power supply system (1), whose data is locally available to the controller (9), with the controller (9) having means which are used to match the parameters of the actuator (10) for the generation of the actuating signal in such a manner that a voltage dip is avoided in the on-board power supply system voltage,
**characterized in that**
the voltage level of the on-board power supply system (1) has at least one associated limit value, with means being provided by means of which, if the first limit value of the on-board power supply system voltage is undershot, the maximum current consumption and the maximum current gradient of the actuator (10) are limited by matching of the parameters, in such a manner that the heavy-current load is disconnected in a graduated manner, without having to disconnect it totally.

2. Motor vehicle on-board power supply system according to Claim 1, **characterized in that** the device (11) for detection of the voltage level in the on-board power supply system (1) is integrated in the heavy-current load (7).

3. Motor vehicle on-board power supply system according to Claim 1 or 2, **characterized in that** the voltage level in the on-board power supply system (1) has at least one further associated limit value, with convenience loads being disconnected when this limit value is undershot.

4. Motor vehicle on-board power supply system according to Claim 3, **characterized in that** the further limit value is higher than the first limit value.

5. Motor vehicle on-board power supply system according to one of the preceding claims, **characterized in that** the dynamic, safety-relevant heavy-current load (7) is in the form of an electromechanical steering system.

6. Method for driving a heavy-current load in a motor vehicle on-board power supply system according to Claim 1, **characterized in that** the on-board power supply system voltage is detected continuously by means of the device (11) for detection of the voltage level of the on-board power supply system (1), and the controller (9) matches the parameters of the actuator (10) for the generation of the actuating signal, in such a manner that a voltage dip is avoided in the on-board power supply system voltage, with the voltage level of the on-board power supply system (1) having at least one associated limit value, with the maximum current consumption and the maximum current gradient of the actuator (10) being limited by matching of the parameters if the first limit value of the on-board power supply system voltage is undershot, in such a manner that the heavy-current load is disconnected in a graduated manner, without having to disconnect it totally.

## Revendications

1. Réseau de bord de véhicule automobile comprenant une charge à courant fort dynamique importante pour la sécurité qui englobe un détecteur pour acquérir une grandeur d'entrée, un appareil de commande pour générer un signal de commande et un actionneur pour convertir le signal de commande en une grandeur de sortie, un dispositif (11) de détection du niveau de tension du réseau de bord de véhicule automobile (1) étant associé à la charge à courant fort (7), dont les données sont disponibles localement à l'appareil de commande (9), l'appareil de commande (9) intégrant des moyens avec lesquels, lors de la génération du signal de commande, les paramètres de l'actionneur (10) sont adaptés de manière à éviter une chute de la tension du réseau de bord, **caractérisé en ce qu'**au moins une valeur limite est associée au niveau de tension du réseau de bord (1), des moyens étant prévus avec lesquels, lorsque la tension du réseau de bord devient inférieure à la première valeur limite, la consommation de courant maximale et le gradient de courant maximum de l'actionneur (10) étant limités par une adaptation des paramètres de telle sorte qu'il se produit un arrêt graduel de la charge à courant fort sans mise hors service totale de celle-ci.

2. Réseau de bord de véhicule automobile selon la revendication 1, **caractérisé en ce que** le dispositif (11) de détection du niveau de tension dans le réseau de bord (1) est intégré dans la charge à courant fort (7).

3. Réseau de bord de véhicule automobile selon la revendication 1 ou 2, **caractérisé en ce qu'**au moins une valeur limite supplémentaire est associée au niveau de tension dans le réseau de bord (1), dont le franchissement vers le bas entraîne une mise hors service des charges de confort.

4. Réseau de bord de véhicule automobile selon la revendication 3, **caractérisé en ce que** la valeur limite supplémentaire est supérieure à la première valeur limite.

5. Réseau de bord de véhicule automobile selon l'une quelconque des revendications précédentes, **caractérisé en ce que** la charge à courant fort (7) dynamique importante pour la sécurité est réalisée sous la forme d'un système de direction électromécanique.

6. Procédé de commande d'une charge à courant fort dans un réseau de bord de véhicule automobile selon la revendication 1, **caractérisé en ce que** la tension du réseau de bord est acquise continuellement au moyen du dispositif (11) de détection du niveau de tension du réseau de bord (1) et l'appareil de commande (9), lors de la génération du signal de commande, adapte les paramètres de l'actionneur (10) de manière à éviter une chute de la tension du réseau de bord, au moins une valeur limite étant associée au niveau de tension du réseau de bord (1), une chute de la tension du réseau de bord au-dessous de la première valeur limite entraînant une limitation de la consommation de courant maximale et du gradient de courant maximum de l'actionneur (10) par une adaptation des paramètres de telle sorte qu'il se produit un arrêt graduel de la charge à courant fort sans mise hors service totale de celle-ci.
